# EUROPEAN PATENT APPLICATION

(11) **EP 3 672 196 A1**
(43) Date of publication of application: **24.06.2020**
(21) Application number: 19216625.4
(22) Date of filing: 16.12.2019
(51) Int. Cl.: H04L 29/06, F02C 9/00, F02C 9/28, H04L 9/32, H04L 29/08, G06F 21/62

(54) **A METHOD AND PROCESS FOR BLOCKCHAIN IMPLEMENTATION WITH THIRD PARTY DEVICES**

(30) Priority: 20.12.2018 US 201862783017 P; 20.12.2018 US 201862782984 P; 27.12.2018 US 201862785601 P; 22.02.2019 US 201916283644; 20.11.2019 US 201916687919
(71) Applicant: Rolls-Royce North American Technologies, Inc., Indianapolis, IN 46241 (US); Rolls-Royce Corporation, Indianapolis, IN 46225 (US)
(72) Inventor: Skertic, Richard, Carmel, IN 46033 (US); Costello, John, Indianapolis, IN 46231 (US); Duge, Robert, Carmel, IN 46033 (US)
(74) Representative: Rolls-Royce plc

(57) **Abstract**

A method for controlling an engine having a control module and smart nodes. The method includes maintaining a block chain ledger, which includes an information block from at least a preceding engine start, may be at the control module of the aircraft engine. The method also includes maintaining a hash of at least a digital certificate and data at one of the smart nodes; transmitting a message including the hash to the control module; receiving the message at the control module; determining a control hash based upon the information from at least a preceding engine start at the control module; module comparing the hash to the control hash at the control; and based upon the comparison, starting the engine and updating the block chain ledger as a function of the received message.

## Description

### BACKGROUND

Aircrafts, such as commercial and military aircraft, include aerospace control systems that control and monitor aircraft engines. The aerospace control systems may control and/or monitor aerospace control system components such as, for example, aircraft engine pressure sensors, temperature sensors, solenoids, and actuators. The aerospace control systems may also control and/or manage other aircraft engine parts and/or functionality. For example, aerospace control systems may assist in ensuring optimum aircraft engine efficiencies during flight are achieved by receiving various flight condition information and controlling various aircraft engine operations, such as fuel flow, valve positions, and others. Aerospace control systems may include a full authority digital engine controller ("FADEC") that includes an electronic engine controller ("EEC") or engine control unit ("ECU"). The FADEC may further include a central processing unit ("CPU"), memory, and a data bus to communicate with other aircraft engine components, such as aircraft engine sensors and actuators. In addition, the FADEC may include maintenance ports and/or communication ports. These ports include connector interfaces for various connector types such as Ethernet ports, serial ports, and/or universal serial bus ("USB") ports, among others, that may connect with different parts of the aircraft.

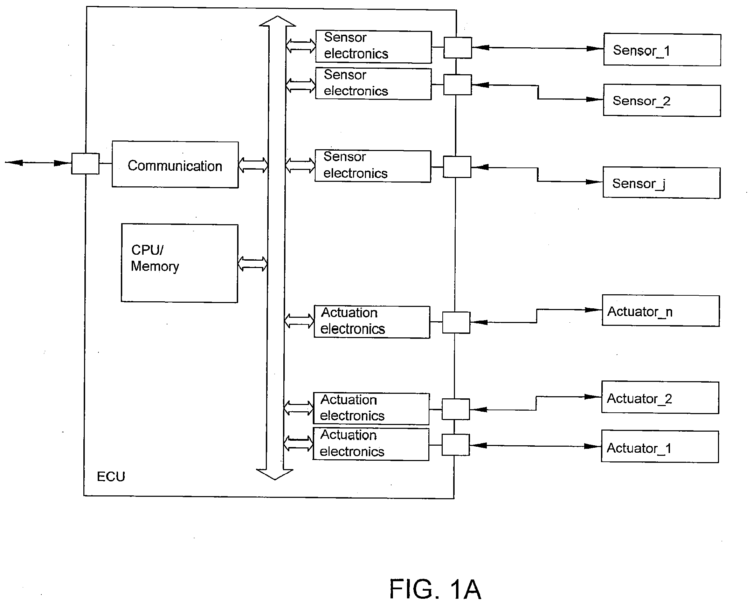

Aerospace control systems may be implemented as a centralized (or federated) control system ("CCS") architecture design or a distributed control system ("DCS") architecture design. Aerospace control systems incorporating a CCS architecture design include a FADEC with a CPU that handles all processing functions as generally shown in Fig.1A. The FADEC also includes additional electronic circuitry required for data acquisition (such as from the various sensors) as well as signal conditioning. In addition, interface (*e.g*., wire) harnesses may be used to connect the various aerospace control system components, such as sensors and/or actuators to the FADEC.

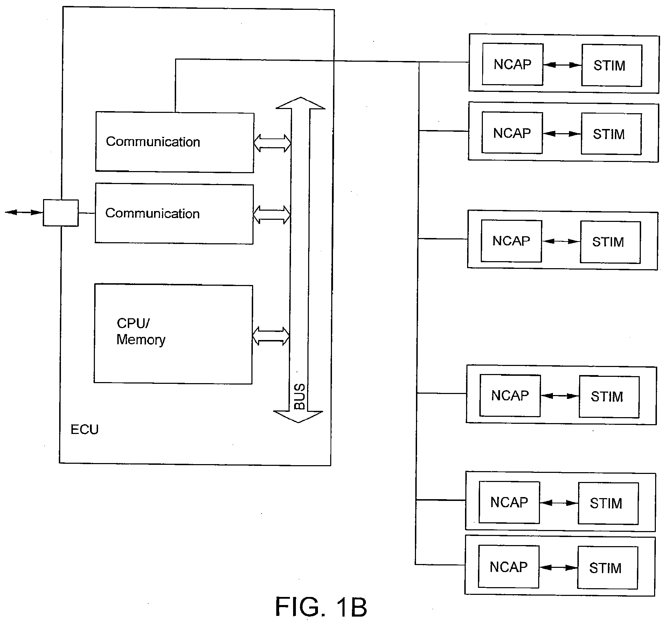

An aerospace control system incorporating a DCS architecture design, however, may not require a FADEC with this additional circuitry. Instead, the various aerospace control system components (*e.g*., sensors and/or actuators) include local processing capabilities that can relay information to the FADEC's CPU as shown in Fig.1B. In addition, a DCS architecture design includes digital communication between the FADEC and the various sensors and/or actuators, rather than interface harnesses. Aerospace control systems with a DCS architecture design may also employ a data concentrator (*e.g*., concentrator node) that provides for communication with both components that do not include local processing capabilities as well as components that do include local processing capabilities. The data concentrator facilitates the communications between the FADEC and the nodes.

These aerospace architectures, however, have vulnerabilities during operation in a cyber-hostile environment. For example, threats from a cyber-attack can come from software loaded onto the FADEC via one of the FADEC's maintenance or communication ports. Threats may also come from hacking into access points over communication links between the FADEC and other parts of the aerospace control system, such as sensors and actuators. In addition, aerospace architectures are vulnerable to "hardware hacks," where hardware, such as the FADEC or a communication link, is physically altered to allow access to the aerospace control system. Cyber threats may also include passively extracting executable code or software images via software, JTAG and serial interfaces (e.g.RS 232, USB, etc...). Offensively extracting executable code or software images via direct accessing or removal of flash memory; Extraction, analysis and decompiling firmware images and manipulation of firmware images to gain access and exploit communications or controls, or to attack some other area of functionality.

Engine manufacturers are the type certificate holder for all aspects of each engine, engine controls, communications network, power distribution, etc. The certification framework of FAA and EASA requires for new engine programs, these systems must be demonstrated to be cyber secure. Thus the engine manufacturer is responsible for the security of the data and controls used in the engine network to process sensor data, operate actuators, handle communications with the airframe, monitor safety and criticality issues, etc. Engine manufacturers typically work with external suppliers (third party vendors) to manufacture smart sensors or other similar products/components. These electronic interface poses a new risk for cyber hacking via a third party interaction.

To address potential weaknesses with the authenticity of each part, confirmation of the software configuration, and provenance of the part, a methodology to validate that the third party components are the ones designed, developed, qualified and certified for the manufacturers engines using a block chain ledger becomes advantageous.

As used herein a block chain or distributed ledger being a cryptographically secure ledger containing many different transactions, which may be used to provide secure communication within the engine. The transactions may be grouped into blocks. The blocks may be linked (i.e., chained) together with cryptographic algorithms to form a block chain. An advantage of block chain is its integrity. Once appended to the block chain for a sufficient amount of time, revising blocks to add, modify, and/or remove transactions becomes intractable (i.e., substantially impossible).

### SUMMARY

Presented is a method for controlling an engine having a control module and smart nodes. The method includes maintaining a block chain ledger may be at the control module of the aircraft engine, where the block chain may include an information block from at least a preceding engine start. The method may also include maintaining a hash of at least a digital certificate and data at one of the smart nodes; transmitting a message including the hash to the control module; receiving the message at the control module; determining a control hash based upon the information from at least a preceding engine start at the control module; module comparing the hash to the control hash at the control; and based upon the comparison, starting the engine and updating the block chain ledger as a function of the received message.

The method may further include maintaining a second hash of at least the digital certificate and data at another of the smart nodes; wherein the message includes the second hash; and wherein the step of comparing the hash to the control hash, further comprises comparing the second hash to the control hash. The step of transmitting the message also includes encrypting the message with one of a private key or public key. The step of receiving the message also comprises decrypting the message with one of a private key or public key. The method may further include at the one of the smart nodes maintaining a local block chain ledger, the local block chain may include a digital certificate and data from at least the preceding engine start, and the step of transmitting may further include updating the local block chain ledger. The data may be selected from the group consisting of manufacturer, serial number of the smart node, software configuration, date of manufacture, date of qualification, public key and a preceding hash. The step of updating the local block chain ledger further comprises deleting the preceding block from the local block chain ledger. The method may further include updating the digital certificate. The digital certificates are updated annually. The step of determining a control hash further comprises updating the block chain ledger with a digital certificate and data associated with the one smart node prior to the comparison. The data may include a hash from a preceding smart node message. The control module and smart nodes may be arranged in a DCS architecture. The control module and smart nodes may be arranged in a CCS architecture. The control module maintains block chain ledgers for each of the smart nodes.

A method of authentication of a smart node in a gas turbine engine, may include: determining the required operational characteristics for the smart node; generating a hash at a control module reflective of required operational characteristics for the smart node; storing the hash in a block chain; receiving a second hash at the control module from the smart node; comparing the hash in the block chain with the second hash; authenticating the operation of the smart node based upon the comparison; and, updating the block chain with the second hash.

The method may further include generating the second hash at the smart node as at least a reflection of operations characteristics of the smart node. The second hash is further reflective of a preceding hash contained in a local block chain at the smart node. The method may further include starting a gas turbine subsequent to the authentication of the smart node. The generation of the second hash may be performed upon installation of the smart node on the gas turbine.

A method for authenticating a component on a gas turbine prior to operation, may include: maintaining a block chain ledger at a control module of the gas turbine, the block chain includes successive information blocks; the information blocks may include information reflective of at least the component; receiving a message at the control module from the component; at the control module determining a control hash based upon the information reflective of at least the component; determining a hash based at least upon the received message and at the control module comparing the hash to the control hash; based upon the comparison, authenticating the component, updating the block chain ledger as a function of the receive message; and, operating the gas turbine.

### BRIEF DESCRIPTION OF THE DRAWINGS

The following will be apparent from elements of the figures, which are provided for illustrative purposes.
FIGS. 1A and 1B are respective illustrations of a Centralized Control System and a Distributed Control System for of an engine.
FIG. 2 is an illustration of an aircraft engine employing an engine control system in accordance with some embodiments.
FIG. 3 illustrates a block diagram of an engine control system in accordance with some embodiments;
FIG. 4 illustrates a block diagram of an engine control system in accordance with embodiments of the disclosed subject matter.
FIG. 5. illustrates a block diagram of another engine control system in accordance with embodiments of the disclosed subject matter.
FIG. 6 lists examples of data sent in messages in accordance with embodiments of the disclosed subject matter.
FIG. 7 illustrates a smart node creating and transmitting a hash to the control module in accordance with embodiments of the disclosed subject matter.
FIGS. 8A and 8B illustrate the 1:N and 1:1 relationship respectively between a central block chain ledger and smart nodes in accordance with embodiments of the disclosed subject matter.

While the present disclosure is susceptible to various modifications and alternative forms, specific embodiments have been shown by way of example in the drawings and will be described in detail herein. It should be understood, however, that the present disclosure is not intended to be limited to the particular forms disclosed. Rather, the present disclosure is to cover all modifications, equivalents, and alternatives falling within the spirit and scope of the disclosure as defined by the appended claims.

### DETAILED DESCRIPTION

For the purposes of promoting an understanding of the principles of the disclosure, reference will now be made to a number of illustrative embodiments in the drawings and specific language will be used to describe the same.

FIG. 1A illustrates a Centralized Control System (CCS), the control system has been optimized to run the engine and to process the data from the sensors and/or to transmit control signals to the actuators. These signals are either analog or digital communications. In this topology, the data bus connecting the controller to the sensors and actuators provides a major point of entry for a potential cyberattack to the CPU and memory within the Engine Control Unit (ECU). In addition to the data bus, the external hardware interfaces are also points of ingress for a cyber-attack.

FIG 1B illustrates a Distributed Control System (DCS). Although the DCS shown in Fig. 1B offers some control advantages over the CCS noted in Fig. 1A, both control architectures have vulnerabilities during operation in cyber hostile environments. The DCS shown in Figure 1B has additional access points over the communications link between the FADEC and the Control / Actuation nodes where a cyber-attack may gain entrance to the control system. Obvious areas of susceptibility are the maintenance ports, connector interfaces for traditional connectors, Ethernet and serial communications ports. When combined with the potential for smart sensors or smart nodes, the cyber threats are even more significant as these nodes will have integral microprocessors and software for functionality.

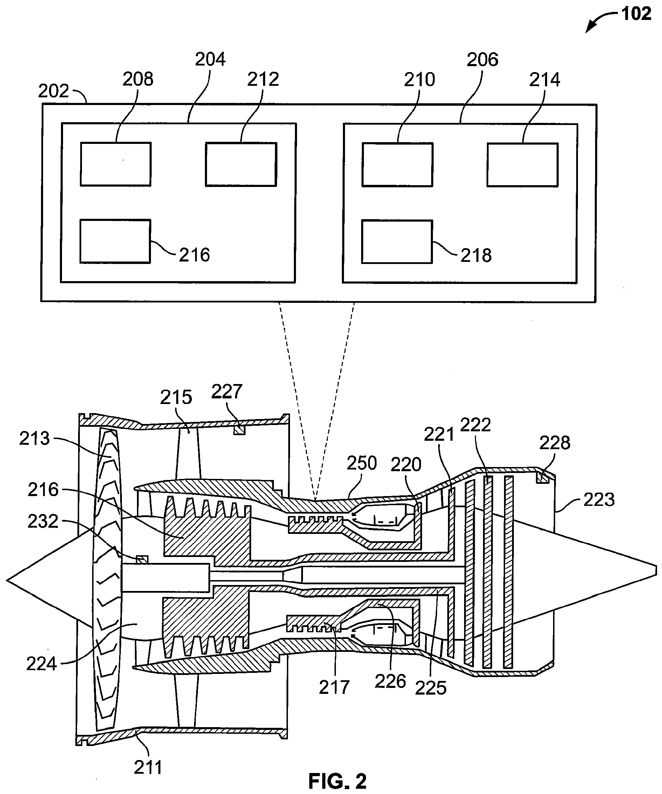

FIG. 2 illustrates the aircraft engine 102. The aircraft engine 102 includes an engine control system 202 that includes a control node 204 and a concentrator node 206. The control node may be, for example, a FADEC. Each of the control node 204 and concentrator node 206 includes electronic circuitry. The electronic circuitry may include one or more processing units 208, 210. A processing unit can be, for example, a microprocessor, an execution unit or "core" on a microprocessor chip, a digital signal processor (DSP), a soft or hard core within a field-programmable gate arrays (FPGA), a processor within an application-specific integrated circuit (ASIC), a general processing unit (GPU), a commercial off the shelf (COTS) processor, or any other suitable processor.

Each of the control node 204 and concentrator node 206 may include instruction memory 212, 214, respectively. Instruction memory 212, 214 can store instructions that can be accessed (e.g., read) and executed by processing units 208, 210, respectively. For example, each of instruction memory 212, 214 can be a non-transitory, computer-readable storage medium such as a read-only memory (ROM), an electrically erasable programmable read-only memory (EEPROM), flash memory, a removable disk, CD-ROM, any non-volatile memory, or any other suitable memory.

Each of the control node 204 and concentrator node 206 may also include working memory 216, 218, respectively. Processing units 208, 210 can store data to, and read data from, working memory 216, 218, respectively. For example, processing units 208, 210 can store a working set of instructions to working memory 216, 218, such as instructions loaded from instruction memory 212, 214, respectively. Processing units 208, 210 can also use working memory 208, 210, respectively, to store dynamic data.

FIG. 2 further illustrates, as part of aircraft engine 102, a fan 213, a first compressor 216, a second compressor 217, turbines 220, 221, 222, propulsion nozzle 223, and fan duct 211. The fan duct 211 is supported by guide vanes 215 extending from engine platform 250. The fan 213 is driven by a first shaft 224 connected to fan 213. First compressor 216 is driven by turbine 221 via a second shaft 225, and second compressor 217 is driven by turbine 220 via a third shaft 226. Engine control system 202 may also be communicatively coupled to one or more engine control devices 227, 228, 232 such as sensors (e.g., pressure or speed transducer) or actuators.

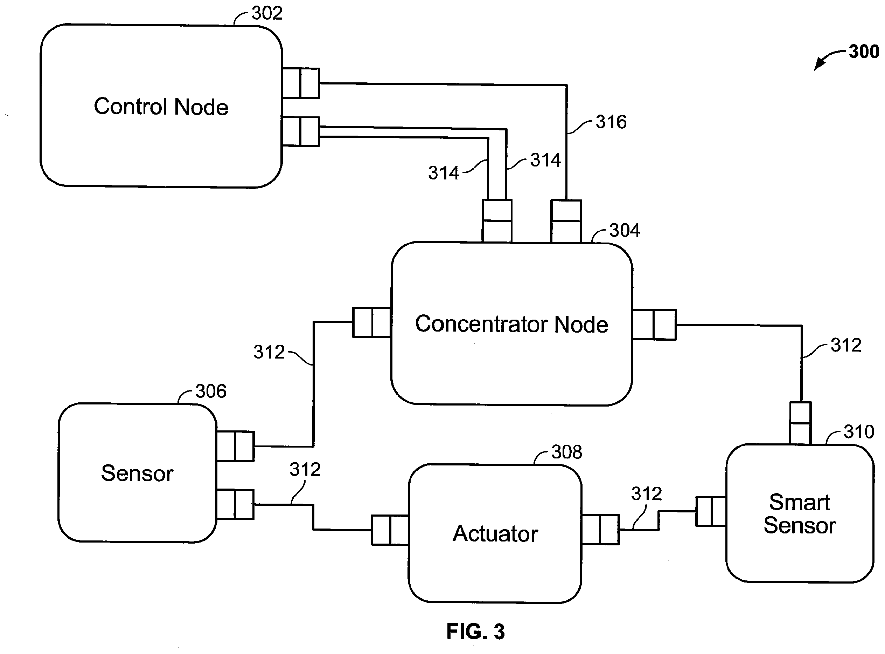

FIG. 3 illustrates a block diagram of an engine control system 300 that includes a control node 302, a concentrator node 304, one or more sensors 306, one or more actuators 308, and one or more smart sensors 310. Concentrator node 304 is communicatively coupled to each of one or more sensors 306, one or more actuators 308, and one or more smart sensors 310 over communication link 312. For example, concentrator node 304 may communicate with each of one or more sensors 306, one or more actuators 308, and one or more smart sensors 310 over communication link 312, which may be a fiber optic communication link, an Ethernet link, or any other suitable link. Communication link 312 may employ, for example, an interconnect bus architecture. Communication between the control node 302 and the sensor 306, 310 and the actuator 308 in the embodiment shown in Fig. 3 is via the concentrator node.

Sensor 306 may be, for example, an optical sensor, a pressure sensor, a temperature sensor, or any other suitable sensor. Sensor 306 may provide sensor readings over communication link 312 to concentrator node 306. Smart sensor 310 may be a sensor that also provides processing capability. For example, rather than merely providing raw sensor readings, smart sensor 310 may provide calibrated readings over communication link 312 and/or may bypass the concentrator node 304 and communicate with the control node 302 using the same methodology as employed by the concentrator node 304.

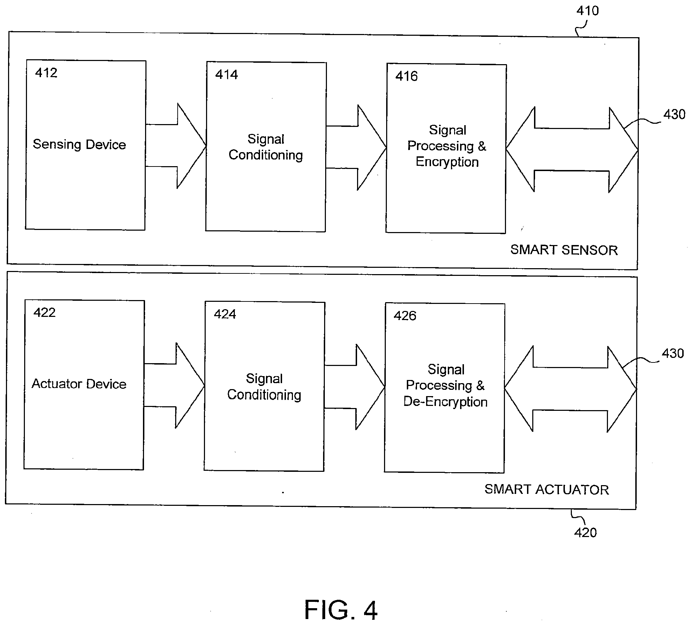

In Fig. 4 the components of a smart sensor 410 and smart actuator 420 (smart nodes) are shown. Smart nodes complete the analog to digital signal processing, use digital device drivers, complete data translation, and other functions that are required for efficient engine control. These sensors, actuators and processing nodes are considered "smart" since they have the ability to evaluate the sensed value or drive an actuator to provide a digital output. Another variant of the smart node is the data concentrator to process the analog to digital conversion, signal processing, encryption, communications, etc. The sensing device 412 passes the analog signal to the signal conditioning device 414 which scales or as noted previously calibrates the analog signal, the calibrated signal is then operated on by the signal processing and encryption device 416. The output of the signal processing and encryption process is transferred digitally from the smart sensor 410 over a digital network. Likewise, is the operation of smart actuator 420, where the actuator device 422, receives calibrated and scaled signal from the signal conditioning device 424, which receives an analog signal from a signal processing and de Encryption device 426. The smart actuator device also sends digital signals back to the control module, such as position data of the actuator in the same manner as the smart sensor 410.

Returning to Fig. 3, in some examples, concentrator node 306 includes drivers that can connect via a direct link (or over a bus architecture), such as an optical or electrical harness, to one or more actuators 308.

Concentrator node 304 is also communicatively coupled to control node 302 over at least a first communication link 314. The first communication link 314 may be fiber optic, Ethernet, hardwired and/or wireless. First communication link 314 may be a fiber optic link, such as one using multi-mode optical fiber (*e.g*., a multi-mode fiber optic link), for example. Control node 302 is operable to transmit to, and receive data from, concentrator node 304 over first communication link 314. For example, concentrator node 304 may send sensor readings, such as from one or more sensors 306 or one or more smart sensors 310, to control node 302 over first communication link 314. In addition, control node 302 may send control messages to concentrator node 304, such as control messages to control one or more actuators 308, over first communication link 314. In some examples, communications over first communication link 314 are encrypted.

In some examples, first communication link 314 includes multiple fiber optic links, such as in a braided ring. In some examples, concentrator node 304 is also communicatively coupled to control node 302 over a second communication link 316. Second communication link 316 may also be a fiber optic link, a hardwired link, such as an Ethernet link or wireless. In some examples, control node 302 is operable to transmit to, and receive data from, concentrator node 304 over second communication link 316. In some examples, communications over second communication link 316 are encrypted.

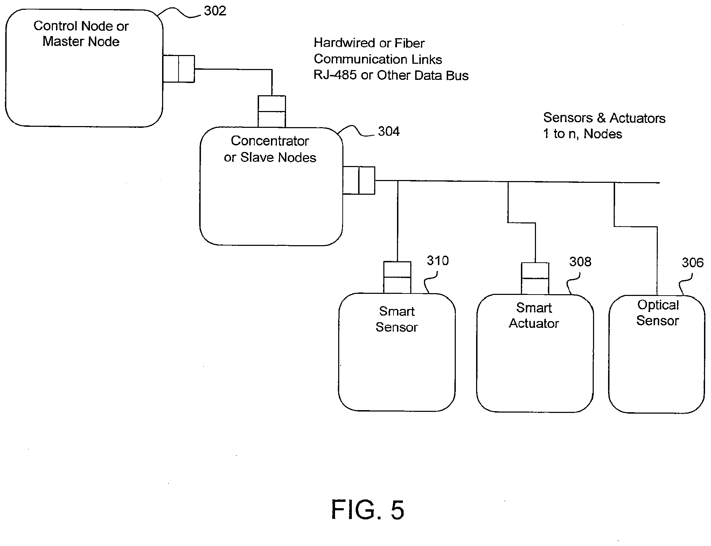

FIG. 5 illustrates an example of a Distributed Control System (DCS) according to embodiments of the disclosed subject matter. The components, control node 302, concentrator node 305, smart sensors 310 and smart actuators 308 preform similar functions as described above with respect to the CCS system, but in a distributed architecture.

To address potential weaknesses with the authenticity of each part in the control system architectures, confirmation of the software configuration, and provenance of the part, as well as protect against a cyber-attack, a methodology to use block chain (i.e. a distributed ledger) with digital certificates to validate that the parts are the ones designed, developed, qualified and certified for respective engine is presented. Third parties offering smart sensor/actuator or smart nodes for a respective architecture are required to use a block chain encryption protocol with manufacturer's issued digital certificate. The methodology allows externally provided smart devices to communicate within the architecture after confirming the identity and authenticity of the parts. With this block chain integration the suppliers may develop a unique block chain ledger for the control module and each smart sensor, smart actuator or smart node.

According to embodiments of the disclosed subject matter, the master or control node (control module) undertakes the method to ensure the third party supplied nodes are authorized, properly configured and operable with the control architecture irrespective of whether the architecture is a CCS or a DCS. The method is illustrated with respect to the architecture of Figs. 3 and 5, but is envisioned to be equally as beneficial to other architectures.

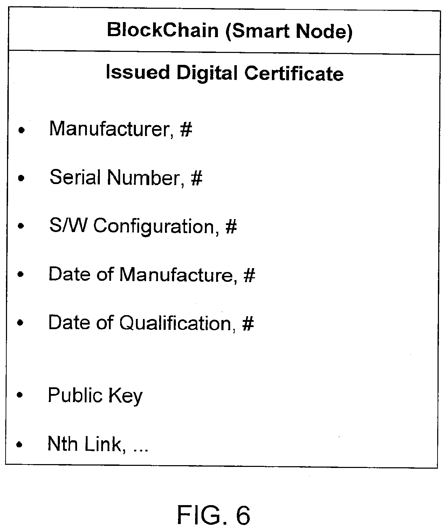

The control module 302 polls each of the nodes upon startup of the engine, or other regularly repeating operation or event, the nodes respond by transmitting a message to the control module. The control module polling may simply be an initial command to start or sequence of commands. The transmitted message may include a hash of a digital certificate maintained at the node, the hash may further include data related to the node, as well as a preceding hash. Figure 6 notes some of the basic information that may be included in the digital certificate and/or data from each smart device.

For example, the data may include the manufacturer of the node, the serial number/model of the smart node, the specific software configuration of the node, date of manufacture of the node, date of qualification of the component, date of installation, a public key and/or a preceding hash (i.e. the hash of the preceding message sent by the node). Additionally, other data, such as engine run time, time stamps etc. may also be included. The digital certificate, data and hash may be maintained at the node using a local block chain ledger, and upon transmission of the message the local block chain ledger may be updated. In accordance with embodiments described herein, the nodes may additionally encrypt the message with one of a private or public key from an asymmetric key pair. The local block chain may also be truncated to conserve memory space.

Upon receiving the hash from each of the nodes, the control module using a corresponding public or private key from the key pair, decrypts the message from each of the nodes. The control module 302 then determines control hashes for each of the nodes (306, 308 and 310) based upon information stored in a block of the central block chain ledger associated with the preceding start/event. Each block in the central block chain ledger may include the digital certificate, data and /or hashes from the messages sent by the nodes in the preceding start up.

The control module 302 may compare the determined control hash with the hash of the message or the preceding hash. In some embodiments, the control hash may be a collection of hashes from each of the nodes, such that the components are validated as a whole rather than individually. The control hash may be determined by information stored in the central block chain ledger and/or from the data received in the message from each of the nodes. For example, the control node 302, may use the information known about the smart node, such as serial number, date of install, previous hash etc. to generate the control hash, or the control node 302 may use the same data received in the message along with the previous hash to determine the control hash, this latter example ensures the data has not been tampered with subsequent the hashing.

Based upon the comparison, the authenticity and other features of the smart node may be confirmed and the startup operation may proceed. In addition, the central block chain as well as the local node block chains may be updated as a function of the received message. Given the limited memory typically associated with the smart nodes, the local block chain ledger may delete a preceding block from the local block chain ledger, such that the local block chain ledger maintains a limited number of block, whereas the larger central block chain may advantageously maintain a more complete log as its memory is typically not as limited.

Upon installation of a new node or upon a regularly occurring period, it may be necessary to update the central block chain ledger, in addition to the local block chains. These updates may be required as a result of the issuance of a new digital certificate, a new asymmetric key pair, or other event. For example, a new digital certificate may be issued annually to the manufacturer, a new manufacturer for a component is established, and/or software is updated. The updates may be accomplished with new nodes, or updated nodes broadcasting changes to the control module during an initialization step. The initialization advantageously results in an updated central block chain which contains an immutable record of the changes.

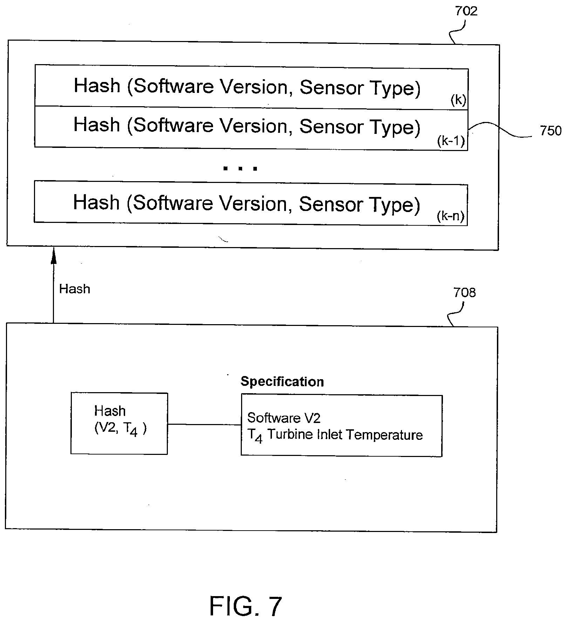

While it is advantageous to use asymmetric encryption, the disclosed subject matter may also be practiced without asymmetric encryption. Hashes reflective of the necessary operation of the smart nodes may also be used (e.g. software version, inputs, outputs of the smart node may be incorporated into a hash), and only smart nodes expressing the hash would be authenticated. Figure 7 illustrates the smart node 708 creating a hash from the software version and sensor type. In Figure 7, the smart node is a temperature sensor for the T₄ (turbine inlet temperature) running a second version of software, thus the smart node creates a hash reflective of the turbine inlet temperature sensor and the second version of software, as well as the previous hash. This hash is then transmitted to the control module 702, which likewise has generated a hash from the properties of the sensor it expects to receive, e.g. turbine inlet temperature sensor running a version two software. Upon confirmation the hashes match, the properties (if not also the manufacturer) are authenticated and the central block chain is updated.

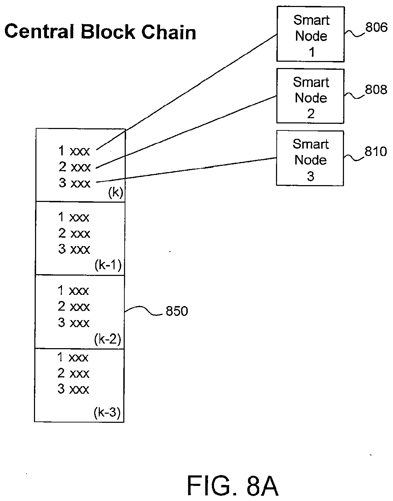

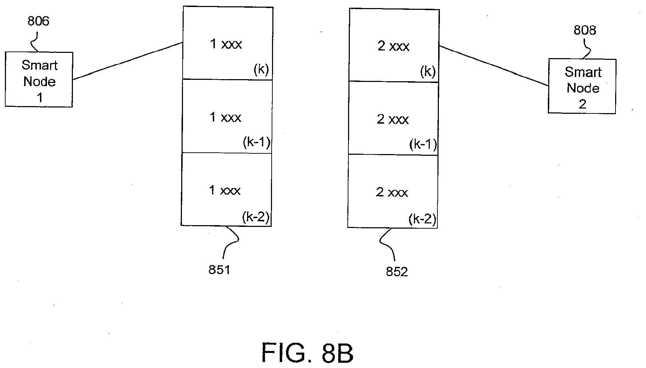

Referring to FIGS. 8A and 8B, the central block chain ledger 850 maintained at the control module may be a single block chain used for each of the smart nodes, e.g. a 1-N relationship with the smart nodes 806, 808, 810, or the block chain ledger may include several block chains 851, 852 that each have a 1 to 1 relationship with a particular smart node, such that a specific central block chain ledger corresponds to one of the smart nodes 806, 808 as shown in Figs. 8A. and 8B.

Although the methods are described with reference to illustrated flowcharts, it will be appreciated that many other ways of performing the acts associated with the methods may be used. For example, the order of some operations may be changed, and some of the operations described may be optional.

Among other advantages, the control system and methods described herein may provide for data security and cyber security countermeasures within the control system. The disclosed method advantageously: confirms part authenticity and configuration, qualification information, validates part numbers, serial numbers, dates of manufacture, configuration, software build, etc.; guarantees external suppliers smart transducers can communicate over the network; provides assurances that the smart transducers can still function even under attack; reduces maintenance burden by capturing the date of engine installation and other engine relevant data; ensures financial support for maintainability. Also the disclosed method ensures both original equipment manufacturer and aftermarket parts meet original design intent as part certificates may be routinely updated including on an annual basis.

Persons of ordinary skill in the art having the benefit of the disclosures herein would recognize these and other benefits as well.

Although examples are illustrated and described herein, embodiments are nevertheless not limited to the details shown, since various modifications and structural changes may be made therein by those of ordinary skill within the scope and range of equivalents of the claims.

## Claims

1. A method for controlling an engine having a control module and smart nodes comprising:
maintaining a block chain ledger at the control module of the aircraft engine, wherein the block chain comprises an information block from at least a preceding engine start;
maintaining a hash of at least a digital certificate and data at one of the smart nodes;
transmitting a message including the hash to the control module;
receiving the message at the control module;
at the control module determining a control hash based upon the information from at least a preceding engine start;
at the control module comparing the hash to the control hash;
based upon the comparison, starting the engine and updating the block chain ledger as a function of the received message.

2. The method of Claim 1, further comprising maintaining a second hash of at least the digital certificate and data at another of the smart nodes; wherein the message includes the second hash; and wherein the step of comparing the hash to the control hash, further comprises comparing the second hash to the control hash.

3. The method of Claim 1 or Claim 2, wherein the step of transmitting the message also includes encrypting the message with one of a private key or public key.

4. The method of any preceding claim, wherein the step of receiving the message also comprises decrypting the message with one of a private key or public key.

5. The method of any preceding claim, further comprising at the one of the smart nodes maintaining a local block chain ledger, wherein the local block chain comprises a digital certificate and data from at least the preceding engine start and wherein the step of transmitting further comprises updating the local block chain ledger.

6. The method of any preceding claim, wherein the data is selected from the group consisting of manufacturer, serial number of the smart node, software configuration, date of manufacture, date of qualification, public key and a preceding hash.

7. The method of claim 5 or claim 6, wherein the step of updating the local block chain ledger further comprises deleting the preceding block from the local block chain ledger.

8. The method of any preceding claim further comprising updating the digital certificate.

9. The method of any preceding claim, wherein the step of determining a control hash further comprises updating the block chain ledger with a digital certificate and data associated with the one smart node prior to the comparison.

10. The method of Claim 9, wherein the data includes a hash from a preceding smart node message.

11. The method of any preceding claim, wherein the control module and smart nodes are arranged in a DCS or CCS architecture.

12. The method of any preceding claim, wherein the control module maintains block chain ledgers for each of the smart nodes.

13. A method of authentication of a smart node in a gas turbine engine, comprising:
determining the required operational characteristics for the smart node;
generating a hash at a control module reflective of required operational characteristics for the smart node;
storing the hash in a block chain;
receiving a second hash at the control module from the smart node;
comparing the hash in the block chain with the second hash;
authenticating the operation of the smart node based upon the comparison; and,
updating the block chain with the second hash.
